# EUROPEAN PATENT APPLICATION

(11) **EP 4 613 398 A1**
(43) Date of publication of application: **10.09.2025**
(21) Application number: 25150056.7
(22) Date of filing: 02.01.2025
(51) Int. Cl.: B21D 45/02

(54) **PUNCH, PUNCHING MACHINE AND METHOD USING THE SAME**

(30) Priority: 05.03.2024 KR 20240031602
(71) Applicant: Samsung SDI Co., Ltd., Yongin-si, Gyeonggi-do 17084 (KR)
(72) Inventor: Song, Sungsub, Yongin-si, Gyeonggi-do 17084 (KR); Lee, Jaewook, Yongin-si, Gyeonggi-do 17084 (KR)
(74) Representative: Gulde & Partner

(57) **Abstract**

A punch (440, 510, 520) comprising:
a punch body (450) comprising an inner space and an air inlet (452);
a push pin (460) comprising an air flow path (466) configured to flow through air introduced from the air inlet (452) to the outside; and
an elastic member (470) between the punch body (450) and the push pin (460), and configured to provide an elastic restoring force,
wherein the push pin (460, 610) and the elastic member (470) are accommodated in the inner space of the punch body (450).

## Description

### BACKGROUND

### 1. Field

Aspects of embodiments of the present disclosure relate to a punch, a punching machine, and a method using the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A positive electrode plate and a negative electrode plate of a lithium-ion battery is manufactured by applying a cathode active material to a positive electrode current collector in the form of a metal thin-film (e.g., an aluminum foil), and applying an anode active material to a negative electrode current collector in the form of a metal thin-film (e.g., a copper foil). The electrode plate is manufactured through mixing, coating, and pressing processes to manufacture a roll-shaped metal thin-film substrate that is coated with an active material, and slitting and notching processes to cut the roll-shaped metal thin-film substrate in accordance with desired battery specifications.

The above information disclosed in this Background section is for enhancement of understanding of the background of the present disclosure, and therefore, it may contain information that does not constitute related (or prior) art.

### SUMMARY

The notching process may refer to a process of manufacturing an electrode plate that meets the desired battery specifications by punching the supplied substrate using a punching mold apparatus. When the substrate is punched out, the remaining parts outside the battery specifications are discarded as scraps. In this process, if a scrap is not completely discharged into a collection area, the undischarged scrap may enter into the battery. In this case, the scrap may cause defects in the battery, such as low voltage defects, short circuit defects, capacity defects, and/or the like.

Embodiments of the present disclosure may be directed to a punch, punching machine, and method using the same.

These and other aspects and features of the present disclosure will be described in or will be apparent from the following description of embodiments of the present disclosure.

According to a first aspect of the present disclosure, a punch includes: a punch body including an inner space and an air inlet; a push pin including an air flow path configured to flow through air introduced from the air inlet to the outside; and an elastic member between the punch body and the push pin, and configured to provide an elastic restoring force. The push pin and the elastic member are accommodated in the inner space of the punch body.

In a preferred embodiment, the push pin may include a head, and a rod protruding from the head. The air flow path may be located within the rod.

Preferably, the rod may have a first hole located at one side surface of the rod, and a second hole located at a lower surface of the rod; and the air flow path may include a first air passage extending in a first direction, and a second air passage extending in a second direction different from the first direction. The first hole may be configured to flow the air introduced from the air inlet into an interior of the rod; and the second hole may be configured to flow to the outside, the air flowing into the interior of the rod that passes through the first air passage and the second air passage.

More preferred, the rod may have a first hole located at one side surface of the rod, a second hole located at another side surface of the rod, and a third hole formed at a lower surface of the rod; and the air flow path may include a first air passage extending in a first direction, and a second air passage extending in a second direction different from the first direction. The first hole and the second hole may be configured to flow the air introduced from the air inlet into an interior of the rod; and the third hole may be configured to flow to the outside, the air flowing into the interior of the rod that passes through the first air passage and the second air passage.

In an embodiment, a through-hole may be located at a lower surface of the punch body to allow the rod to pass therethrough.

In an embodiment, the elastic member may be located between a lower surface of the inner space of the punch body and a lower surface of the head.

In an embodiment, an upper surface of the inner space of the punch body and an upper surface of the head may be spaced from each other.

In an embodiment, the push pin may further include a push member at a lower end of the rod, and a lower surface area of the push member may be greater than a lower surface area of the rod.

In an embodiment, the push pin may be configured to be moved from a first position to a third position through a second position by the air introduced from the air inlet, and the push pin may be configured to be returned to the first position from the third position through the second position by the elastic member if the air from the air inlet is stopped.

In an embodiment, in the first position, a lower surface of the punch body may be flush with a lower surface of the rod.

In an embodiment, the air flow path may be configured to flow the air introduced from the air inlet out to the outside during a movement of the push pin from the first position to the second position.

In an embodiment, the second position may close the air flow path by the punch body.

In an embodiment, a lower surface of the push pin may be configured to directly contact a scrap located below the push pin during at least some point of a movement of the push pin from the second position to the third position.

Another aspect of the present disclosure relates to a punching machine, which includes: a die configured to receive a substrate thereon; a stripper opposite to the die, and configured to move toward the substrate to hold the substrate in place; a punch according to the embodiments described above configured to move toward the substrate to cut the substrate, and remove a scrap resulting from after the substrate is cut; an air blower connected to the punch; and a controller configured to control operations of the stripper, the punch, and the air blower. The punch includes: a punch body including an inner space and an air inlet connected with the air blower; a push pin including an air flow path configured to flow through air introduced from the air inlet out to the outside; and an elastic member between the punch body and the push pin, and configured to provide an elastic restoring force. The push pin and the elastic member are accommodated in the inner space of the punch body.

In an embodiment, the punching machine may further include: a scrap collector located below the die to collect the scrap. The push pin may include a head, and a rod protruding from the head. The air flow path may be located within the rod, and a length of the rod may correspond to a distance between an upper surface of the die and the scrap collector.

In an embodiment, the controller may be configured to: control the stripper to move toward the die to fix the substrate on the die; control the punch to move toward the substrate to cut the substrate while fixed by the stripper; and control the air blower to inject the air into the inner space of the punch body to discharge the scrap formed after the substrate is cut.

In an embodiment, the punch body may be configured to remain fixed and the push pin may be configured to be moved, while the air blower injects the air into the inner space of the punch body.

Another aspect of the present disclosure relates to a punching method, which includes: moving a stripper toward a substrate disposed on a die to hold the substrate in place; moving a punch toward the substrate to cut the substrate; and discharging a scrap formed after the substrate is cut by blowing air into the punch. The punch includes: a punch body including an inner space and an air inlet; a push pin including an air flow path configured to flow through air introduced from the air inlet out to the outside; and an elastic member between the punch body and the push pin to provide an elastic restoring force. The push pin and the elastic member are accommodated in the inner space of the punch body.

In an embodiment, the discharging of the scrap may include: injecting the air into the air inlet of the punch body to blow the air toward the scrap while moving the push pin from a first position to a second position; and injecting the air into the air inlet of the punch body to push away the scrap while moving the push pin from the second position to a third position.

In an embodiment, the method may further include returning the push pin from the third position to the first position by stopping the air injecting into the air inlet of the punch body.

According to some embodiments of the present disclosure, the push pin may not protrude to the outside, thereby preventing the push pin from interfering with the substrate before punching. Further, the scrap may first be pushed out by blowing air through the push pin, and then pushed out once more through a direct contact with the push pin. Thus, the scrap may be effectively discharged to the scrap collector. Accordingly, the scrap may be prevented from entering the battery, thereby reducing an occurrence of battery defects.

According to some embodiments of the present disclosure, the push pin may push the scrap away twice, thereby preventing the scrap from being stuck and allowing the scrap to be effectively ejected. Therefore, the scrap may be prevented from entering into the battery.

Those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating an example of a punching machine according to an embodiment of the present disclosure;
FIG. 2 is a perspective view of a first device according to an embodiment of the present disclosure;
FIG. 3 is a perspective view of a second device according to an embodiment of the present disclosure;
FIG. 4 is a diagram illustrating an example of a punching machine according to an embodiment of the present disclosure;
FIG. 5 is a diagram illustrating an example of an air flow path formed in a push pin according to an embodiment of the present disclosure;
FIG. 6 is a diagram illustrating an example of a push pin including a push member according to an embodiment of the present disclosure;
FIG. 7 is a flowchart illustrating an example of a punching method according to an embodiment of the present disclosure;
FIG. 8 is a diagram illustrating an example of a process of fixing a substrate by a stripper according to an embodiment of the present disclosure;
FIG. 9 is a diagram illustrating an example of a process of cutting the substrate by the punch according to an embodiment of the present disclosure;
FIG. 10 is a diagram illustrating an example of a process of blowing air through an air flow path of a push pin in a state where the push pin is moved downward by an air blower according to an embodiment of the present disclosure;
FIG. 11 is a diagram illustrating an example of a process in which the punch body begins to cover the air flow path of the push pin by further moving the push pin downward by the air blower according to an embodiment of the present disclosure;
FIG. 12 is a diagram illustrating an example of a process in which the punch body has closed the air flow path of the push pin according to an embodiment of the present disclosure; and
FIG. 13 is a diagram illustrating an example of a process in which the push pin is returned to its original position according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms.

These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less.

In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.
In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the term "substrate" may refer to a metal thin-film material used to chemically store energy inside a secondary battery. The substrate may include a positive electrode substrate, a negative electrode substrate, and positive and negative electrode plates coated with active materials.

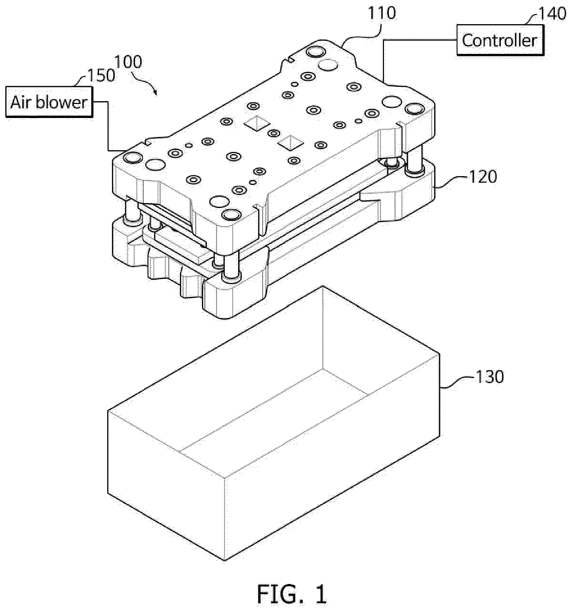

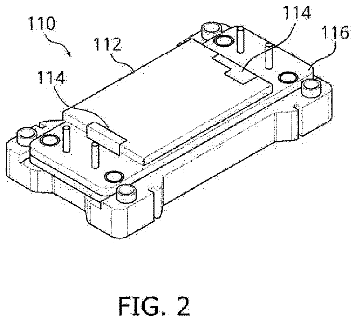

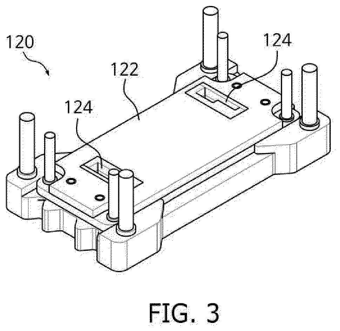

FIG. 1 is a perspective view illustrating an example of a punching machine 100 according to an embodiment of the present disclosure. FIG. 2 is a perspective view of a first device 110 according to an embodiment of the present disclosure. FIG. 3 is a perspective view of a second device 120 according to an embodiment of the present disclosure.

In an embodiment, the punching machine 100 may be a punching apparatus that may punch a continuously provided metal thin-film substrate, and cut the thin-film substrate to a desired size (e.g., a certain or predetermined size) that satisfies a desired specification (e.g., a predetermined specification). Referring to FIG. 1, the punching machine 100 may include the first device 110, the second device 120, a scrap collector 130, a controller 140, and an air blower 150. For example, the first device 110 may be an upper device (e.g., an upper mold), and the second device 120 may be a lower device (e.g., a lower mold). The scrap collector 130 may be disposed below the punching machine 100.

The first device 110 may be disposed to be opposite to the second device 120. The first device 110 may include a stripper 112 that moves toward the substrate to hold the substrate in place, a punch 114 that moves toward the substrate to cut the substrate and remove a scrap formed after the substrate is cut, and a base plate 116 that supports the stripper 112 and the punch 114. The punch 114 may be connected to (e.g., coupled to or attached to) the base plate 116 to allow the punch 114 to be moved up and down. The shape of the stripper 112 and the punch 114 may be determined depending on the shape of the electrode plate to be manufactured.

The second device 120 may include a die 122 on which the substrate to be cut is disposed, and at least one discharge hole 124. The discharge hole 124 may be in the form of a through-hole through which the punch 114 is inserted. Further, the scrap formed after the substrate is cut by the punch 114 may be discharged through the discharge hole 124 to the scrap collector 130 disposed below the second device 120.

In an embodiment, the first device 110 may be configured to move down toward the second device 120, or move up in a direction away from the second device 120. As another example, the second device 120 may be configured to move up toward the first device 110, or move down in a direction away from the first device 110. In a case where the first device 110 moves downward, the stripper 112 may come into contact the die 122. In a case where the substrate is disposed on the die 122, the stripper 112 may contact and secure the substrate. Further, after the first device 110 moves downward and secures the substrate, the punch 114 may move downward and be inserted into the discharge hole 124. The punch 114 may cut the substrate, and the cut substrate (e.g., the scrap) may be discharged downward through the discharge hole 124.

The controller 140 may control the operations of the punching machine 100, the first device 110, the second device 120, the stripper 112, the punch 114, the air blower 150, and other components. For example, the controller 140 may control the stripper 112 to move toward the die 122 to fix the substrate disposed on the die 122. Further, the controller 140 may control the punch 114 to move toward the substrate to cut the fixed substrate. Additionally, the controller 140 may control the air blower 150 to inject air into an air inlet of the punch 114, such that the scrap formed after the substrate is cut by the punch 114 is discharged into the scrap collector 130. For example, the controller 140 may adjust a volume, a pressure, and the like of the air injected and blown through the air blower 150. The controller 140 may communicate with the punching machine 100, the first device 110, the second device 120, the stripper 112, the punch 114, the air blower 150, and other components through wired or wirelessly connections.

In addition to the components described above, the punching machine 100 may also include additional components used for manufacturing electrode plates for secondary batteries.

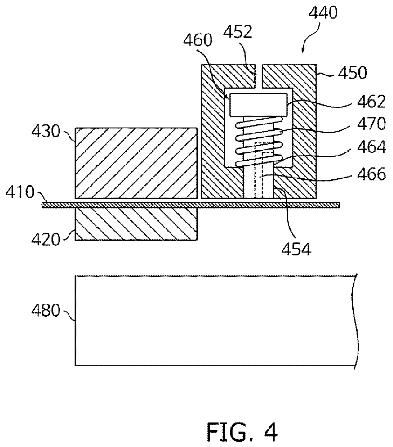

FIG. 4 is a diagram illustrating an example of a punching machine according to an embodiment of the present disclosure.

Referring to FIG. 4, a substrate 410 may be placed on a die 420 of the punching machine (e.g., the punching machine 100 shown in FIG. 1). A stripper 430 and a punch 440 may be disposed on the substrate 410. Further, a scrap collector 480 may be disposed below the punching machine.

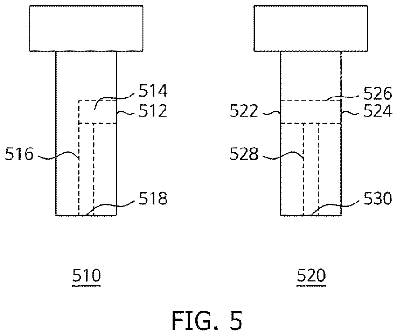

In an embodiment, the punch 440 may include a punch body 450, a push pin 460, and an elastic member 470 disposed between the punch body 450 and the push pin 460. The elastic member 470 may provide an elastic restoring force, for example, the elastic member 470 may be mounted to surround (e.g., around a periphery of) the push pin 460 in the punch body 450. The push pin 460 may include a head 462, and a rod 464 protruding from the head 462. Inside of the rod 464, an air flow path 466 may be formed. An example of the air flow path 466 will be described in more detail below with reference to FIG. 5.

In an embodiment, the punch body 450 may include an inner space, an air inlet 452 in connection with an air blower, and a through hole 454 through which the rod 464 of the push pin 460 passes. A diameter of the through-hole 454 may be greater than a diameter of the rod 464, but may smaller than a diameter of the head 462.

In an embodiment, an upper surface of the inner space of the punch body 450 (e.g., an upper inner surface of the punch body 450) and an upper surface of the head 462 may be spaced apart from each other. The spacing may create a buffer space, allowing air to easily flow from the air inlet 452 into the inner space of the punch body 450. Further, the buffer space may prevent or substantially prevent the head 462 from colliding with the upper surface of the inner space of the punch body 450, when the push pin 460 returns to its original position due to the elastic restoring force of the elastic member 470.

In an embodiment, the elastic member 470 may be disposed between a lower surface of the inner space of the punch body 450 (e.g., a lower inner surface of the punch body 450) and a lower surface of the head 462. For example, the elastic member 470 may be a spring, but the present disclosure is not limited thereto. In a case where the elastic member 470 is a spring, a diameter of the spring may be greater than the diameter of the rod 464, but may be smaller than the diameter of the head 462.

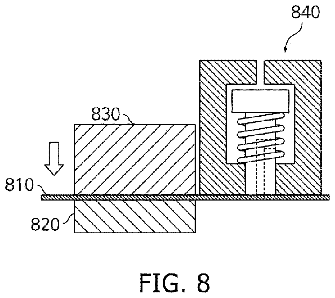

In an embodiment, the push pin 460 may push and discharge a scrap formed after the substrate 410 is cut by the punch body 450. For example, the push pin 460 may first push the scrap downward by blowing air flowing from the air inlet 452 to the outside through the air flow path 466 of the rod 464. Then, the push pin 460 may further move downward due to the air flowing from the air inlet 452, thereby bringing a lower surface of the rod 464 into direct contact with the scrap positioned below the rod, and discharging (e.g., ejecting) the scrap into the scrap collector 480. In this case, a length of the rod 464 that moves downward may be determined based on a distance between an upper surface of the die 420 and the scrap collector 480. An example of a process of discharging the scrap by the push pin 460 will be described in more detail below with reference to FIGS. 8 to 13.

In an embodiment, the length of the rod 464 may be in a range from 2 mm to 10 mm, but the present disclosure is not limited thereto. Further, the diameter of the rod 464 may be in a range from 2 mm to 10 mm, but the present disclosure is not limited thereto. Additionally, a diameter of the air flow path 466 within the rod 464 may be in a range from 0.1 mm to 0.9 mm, but the present disclosure is not limited thereto.

In the above-described structure, the push pin 460 may not protrude to the outside, thereby preventing the push pin 460 from interfering with the substrate 410 before punching. Further, the scrap may first be pushed out by blowing air through the push pin 460, and then pushed out once more through a direct contact with the push pin 460. Thus, the scrap may be effectively discharged to the scrap collector 480. Accordingly, the scrap may be prevented from entering the battery, thereby reducing the occurrence of battery defects.

FIG. 5 is a diagram illustrating an example of an air flow path formed in a push pin according to an embodiment of the present disclosure.

Referring to FIG. 5, a first example 510 illustrates an air flow path within a push pin that may be formed in an upside down "L" shape. In an embodiment, a rod of the push pin (e.g., the rode 464 shown in FIG. 4) may include a first hole 512 formed at one side surface of the rod, and a second hole 518 formed at a lower surface of the rod. In this case, the air flow path may include a first air passage 514 formed in a first direction, and a second air passage 516 formed in a second direction that is different from the first direction. For example, the first direction may be a direction parallel to or substantially parallel to the lower surface of the rod, and the second direction may be a direction perpendicular to or substantially perpendicular to the first direction, but the present disclosure is not limited thereto.

In an embodiment, air introduced from an air inlet (e.g., the air inlet 452 shown in FIG. 4) of a punch body may enter the interior of the rod through the first hole 512. Once the air enters the rod, the air may pass through the first air passage 514 and the second air passage 516, eventually flowing out to the outside (e.g., downstream) through the second hole 518. Thus, the simple air passage allows for low air pressure loss, and air can reliably flow out to the outside along the air passage.

A second example 520 in FIG. 5 illustrates an air flow path within a push pin that may be formed in a "T" shape. In an embodiment, the rod of the push pin may include a first hole 522 formed at one side surface of the rod, a second hole 524 formed at another side surface of the rod, and a third hole 530 formed at the lower surface of the rod. In this case, the air flow path may include a first air passage 526 formed in a first direction, and a second air passage 528 formed in a second direction that is different from the first direction. For example, the first direction may be a direction parallel to or substantially parallel to the lower surface of the rod, and the second direction may be a direction perpendicular to or substantially perpendicular to the first direction, but the present disclosure is not limited thereto.

In an embodiment, air introduced from the air inlet of the punch body may enter the interior of the rod through the first hole 522 and the second hole 524. Once the air enters the rod, the air may pass through the first air passage 526 and the second air passage 528, eventually flowing out to the outside (e.g., downstream) through the third hole 530. Thus, large amounts of air can flow out to the outside through the air passage.

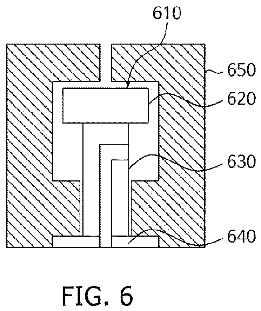

FIG. 6 is a diagram illustrating an example of a push pin 610 including a push member 640 according to an embodiment of the present disclosure.

In an embodiment, the push pin 610 may include a head 620, a rod 630 formed to protrude from the head 620, and a push member 640 disposed at a lower end of the rod 630. A lower surface area of the push member 640 may be greater than a lower surface area of the rod 630. Further, the lower surface area of the push member 640 may be greater than a lower surface area of the head 620. Additionally, the push member 640 may be received in a lower receiving portion of the punch body 650, such that a lower surface of the push member 640 is flush or substantially flush with a lower surface of the punch body 650. In this structure, effective scrap discharge may be achieved when the push pin 610 is brought into direct contact with the scrap, and pushes the scrap out, as the increased contact area with the scrap allows the push member 640 to discharge the scrap more effectively.

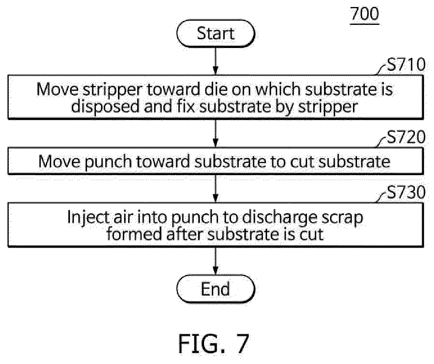

FIG. 7 is a flowchart illustrating an example of a punching method 700 according to an embodiment of the present disclosure.

In an embodiment, each process of the punching method 700 may be performed in response to control instructions (e.g., control signals) from the controller. The punching method 700 may start, and a stripper may be moved toward a die on which a substrate is disposed and the substrate may be fixed by the stripper (S710). A punch may be moved toward the substrate to cut the substrate (S720). The punch may include a punch body including an inner space and an air inlet, a push pin including an air flow path through which air introduced from the air inlet flows out to the outside, and an elastic member disposed between the punch body and the push pin to provide an elastic restoring force. The push pin and the elastic member may be accommodated in the inner space of the punch body.

Thereafter, air may be injected into the punch using an air blower to discharge the scrap formed after the substrate is cut (S730), and the method 700 may end. For example, the air blower may inject air into the air inlet of the punch body to blow air toward the scrap formed after the substrate is cut, while moving the push pin from a first position to a second position. Further, the air blower may inject air into the air inlet of the punch body to push the scrap formed after the substrate is cut away, while moving the push pin from the second position to a third position. Afterward, the air injection into the air inlet of the punch body may be stopped to return the push pin from the third position to the first position.

FIG. 8 is a diagram illustrating an example of a process of fixing a substrate 810 by a stripper 830 according to an embodiment of the present disclosure.

In an embodiment, the processes described in more detail hereinafter with reference to FIGS. 8 to 13 may be performed in the order illustrated in FIGS. 8 to 13. In an embodiment, a punching machine (e.g., the punching machine 100 shown in FIG. 1) is provided with the substrate 810. In this case, the substrate 810 may be disposed on a die 820. Thereafter, the stripper 830 may move toward the die 820 on which the substrate 810 is disposed, and apply pressure to fix the substrate 810. During this process, the punch 840 may also move toward the substrate 810.

In FIG. 8, the punch 840 is illustrated as being in contact with the substrate 810, but the present disclosure is not limited thereto. For example, the punch 840 may remain spaced apart from the substrate 810 before the punch 840 performs an operation of cutting the substrate 810.

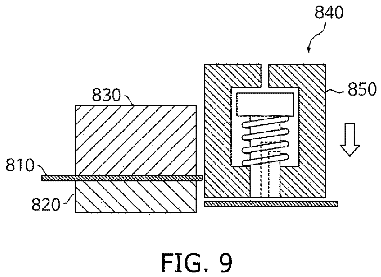

FIG. 9 is a diagram illustrating an example of a process of cutting the substrate 810 by the punch 840 according to an embodiment of the present disclosure.

In an embodiment, with the stripper 830 and the die 820 holding the substrate 810, the punch 840 may move toward the substrate 810 and cut the substrate 810. In more detail, a punch body 850 may be moved downward, and may cut through the substrate 810. While the punch body 850 is cutting the substrate 810, air injection into an air inlet of the punch body may be stopped. Thus, by cutting a portion of the substrate 810, electrode plates for a secondary battery of a desired size (e.g., a certain or predetermined size) may be manufactured.

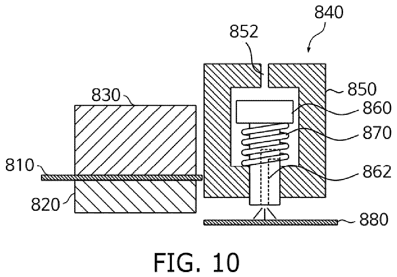

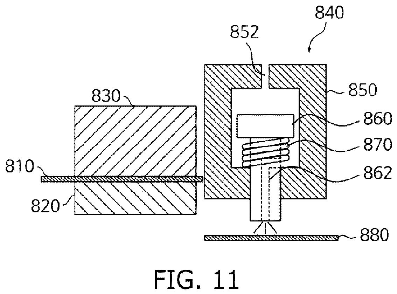

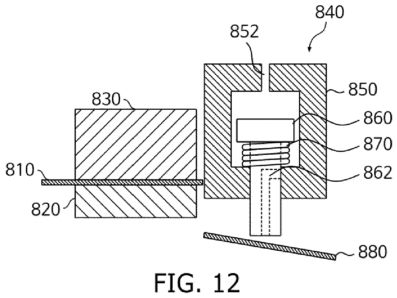

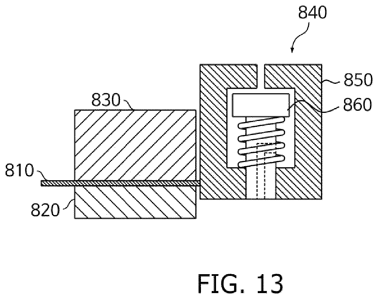

FIG. 10 is a diagram illustrating an example of a process of blowing air through an air flow path 862 of a push pin 860 in a state where the push pin 860 is moved downward by an air blower according to an embodiment of the present disclosure. FIG. 11 is a diagram illustrating an example of a process in which the punch body 850 begins to cover the air flow path 862 of the push pin 860 by further moving the push pin 860 downward by the air blower according to an embodiment of the present disclosure. FIG. 12 is a diagram illustrating an example of a process in which the punch body 850 has closed the air flow path 862 of the push pin 860 according to an embodiment of the present disclosure. FIG. 13 is a diagram illustrating an example in which the push pin 860 is returned to its original position according to an embodiment of the present disclosure.

In an embodiment, the push pin 860 of the punch 840 may discharge a scrap 880 formed after the substrate is cut. In more detail, air may be introduced into the punch 840 from the air inlet 852 by the air blower. In this case, the punch body 850 may remain fixed, and the push pin 860 may be moved (e.g., may be lowered) from the first position to the second position due to the inflow of air.

Referring to FIG. 9, the first position of the push pin 860 may be a position in which a lower surface of the punch body 850 is flush or substantially flush with a lower surface of the push pin 860 (e.g., a lower surface of the rod of the push pin 860). During the movement from the first position to the second position, the push pin 860 may blow air introduced through the air flow path 862 outward (e.g., downward). As a result, the scrap 880 disposed below the punch 840 may be discharged by the blown air.

In an embodiment, the push pin 860 may move from the second position to a third position due to air entering through the air inlet 852. The second position may be a position where the air flow path 862 is initially closed by the punch body 850 as the push pin 860 moves downward. When the air flow path 862 is closed, the push pin 860 may no longer blow air to the outside, and may move downward (e.g., and may only move downward) due to air entering through the air inlet 852. Accordingly, referring to FIG. 12, at least at some point during the movement of the push pin 860 from the second position to the third position, the lower surface of the push pin 860 may come into direct contact with the scrap 880 located underneath the push pin 860 and may discharge the scrap 880. During this process, the elastic member 870 may contract as the push pin 560 moves downward.

In an embodiment, referring to FIG. 13, by stopping the air injection into the punch body 850 through the air blower, the push pin 860 may be returned to the original position by the elastic member 870. For example, the push pin 860 may be returned from the third position to the first position by the elastic member 870. In this case, an upper surface of the push pin 860 and an upper surface of an inner space of the punch body 850 (e.g., an upper inner surface of the punch body 850) may be spaced apart from each other, such that the push pin 860 may be prevented or substantially prevented from colliding with the upper surface of the inner space of the punch body 850 during the process of returning from the third position to the first position.

After the push pin 860 returns from the third position to the first position, the punch 840 and the stripper 830 may move upward sequentially or concurrently (e.g., simultaneously or substantially simultaneously) with each other. Thereafter, the completed cut substrate may be transferred to the outside from the punching machine.

As described above, the push pin may push the scrap away twice, preventing the scrap from getting stuck, and allowing the scrap to be effectively ejected. Therefore, the scrap may be prevented from entering into the battery.

The electronic or electric devices and/or any other relevant devices or components according to embodiments of the present disclosure described herein (e.g., the controller) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### DESCRIPTION OF SOME REFERENCE SYMBOLS

| | | | |
|---|---|---|---|
| 100: | punch machine | 452, 852: | air inlet |
| 110: | first device | 460, 860: | push pin |
| 112, 430, 830: | stripper | 466, 862: | air flow path |
| 120: | second device | 470, 870: | elastic member |
| 122, 420, 820: | die | 462, 620: | head |
| 130: | scrap collector | 464, 630: | rod |
| 140: | controller | 640: | push member |
| 150: | air blower | | |
| 440, 510, 520, 840: | punch | | |
| 450,850: | punch body | | |

## Claims

1. A punch (440, 510, 520) comprising:
a punch body (450) comprising an inner space and an air inlet (452);
a push pin (460) comprising an air flow path (466) configured to flow through air introduced from the air inlet (452) to the outside; and
an elastic member (470) between the punch body (450) and the push pin (460), and configured to provide an elastic restoring force,
wherein the push pin (460, 610) and the elastic member (470) are accommodated in the inner space of the punch body (450).

2. The punch (440, 510, 520) as claimed in claim 1, wherein the push pin (460, 610) comprises a head (462, 620), and a rod (464, 630) protruding from the head (462, 620), and
wherein the air flow path (466) is located within the rod (464).

3. The punch (440, 510) as claimed in claim 2, wherein:
the rod (464) has a first hole (512) located at one side surface of the rod (464), and a second hole (518) located at a lower surface of the rod (464);
the air flow path (466) comprises a first air passage (514) extending in a first direction, and a second air passage (516) extending in a second direction different from the first direction;
the first hole (512) is configured to flow the air introduced from the air inlet (452) into an interior of the rod (464); and
the second hole (518) is configured to flow to the outside, the air flowing into the interior of the rod (464) that passes through the first air passage (514) and the second air passage (516).

4. The punch (440, 520) as claimed in claim 2, wherein:
the rod (464) has a first hole (522) located at one side surface of the rod (464), a second hole (524) located at another side surface of the rod (464), and a third hole (530) formed at a lower surface of the rod (464);
the air flow path (466) comprises a first air passage (526) extending in a first direction, and a second air passage (528) extending in a second direction different from the first direction;
the first hole (522) and the second hole (524) are configured to flow the air introduced from the air inlet (452) into an interior of the rod (464); and
the third hole (530) is configured to flow to the outside, the air flowing into the interior of the rod (464) that passes through the first air passage (526) and the second air passage (528).

5. The punch (440, 510, 520) as claimed in one of claims 2 to 4, wherein a through-hole (454) is located at a lower surface of the punch body (450) to allow the rod (464) to pass therethrough.

6. The punch (440, 510, 520) as claimed in at least one of claims 2 to 5, wherein the elastic member (470) is located between a lower surface of the inner space of the punch body (450) and a lower surface of the head (462).

7. The punch (440, 510, 520) as claimed in at least one of claims 2 to 6, wherein an upper surface of the inner space of the punch body (450) and an upper surface of the head (462) are spaced from each other.

8. The punch (440, 510, 520) as claimed in at least one of claims 2 to 7, wherein the push pin (610) further comprises a push member (640) at a lower end of the rod (630), and
wherein a lower surface area of the push member (640) is greater than a lower surface area of the rod (630).

9. The punch (440) as claimed in at least one of claims 2 to 8, wherein the push pin (460) is configured to be moved from a first position to a third position through a second position by the air introduced from the air inlet (452), and
wherein the push pin (460) is configured to be returned to the first position from the third position through the second position by the elastic member (470) if the air from the air inlet (452) is stopped.

10. The punch (440) as claimed in claim 9, wherein in the first position, a lower surface of the punch body (450) is flush with a lower surface of the rod (464).

11. The punch (440) as claimed in claim 9 or 10, wherein the air flow path (466) is configured to flow the air introduced from the air inlet (452) out to the outside during a movement of the push pin (460) from the first position to the second position.

12. The punch (440) as claimed in at least one of claims 9 to 11, wherein the second position closes the air flow path (466) by the punch body (450).

13. A punching machine (100) comprising:
a die (122, 420, 820) configured to receive a substrate thereon;
a stripper (112, 430, 830) opposite to the die (122, 420, 820), and configured to move toward the substrate (810) to hold the substrate in place;
a punch (114, 440, 840, 510, 520) configured to move toward the substrate to cut the substrate, and remove a scrap (880) resulting from after the substrate is cut;
an air blower (150) connected to the punch (114, 440, 840); and
a controller (140) configured to control operations of the stripper (112, 830), the punch (114, 440, 840), and the air blower (150);
wherein the punch (114, 440, 840, 510, 520) comprises:
a punch body (450, 850) comprising an inner space and an air inlet (452, 852);
a push pin (460, 860) comprising an air flow path (466, 862) configured to flow through air introduced from the air inlet (452, 852) out to the outside; and
an elastic member (470, 870) between the punch body (450, 850) and the push pin (460, 860) to provide an elastic restoring force, and
wherein the push pin (460, 860) and the elastic member (470, 870) are accommodated in the inner space of the punch body (450, 850).

14. A punching method (700) comprising:
moving (S710) a stripper (830) toward a substrate (810) disposed on a die (820) to hold the substrate (810) in place;
moving (S720) a punch (840) toward the substrate (810) to cut the substrate (810); and
discharging (S730) a scrap (880) formed after the substrate (810) is cut by blowing air into the punch (840),
wherein the punch (840) comprises:
a punch body (850) comprising an inner space and an air inlet (852);
a push pin (860) comprising an air flow path (862) configured to flow through air introduced from the air inlet (852) out to the outside; and
an elastic member (870) between the punch body (850) and the push pin (860) to provide an elastic restoring force, and
wherein the push pin (860) and the elastic member (870) are accommodated in the inner space of the punch body (850).

15. The punching method (700) as claimed in claim 14, wherein the discharging (S730) of the scrap comprises:
injecting the air into the air inlet (852) of the punch body (850) to blow the air toward the scrap (880) while moving the push pin (860) from a first position to a second position; and
injecting the air into the air inlet of the punch body (850) to push away the scrap (880) while moving the push pin (860) from the second position to a third position.

## Amended claims

### Amended claims in accordance with Rule 137(2) EPC.

1. A punch (440, 510, 520) comprising:
a punch body (450) comprising an inner space and an air inlet (452);
wherein a push pin (460) comprising an air flow path (466) configured to flow through air introduced from the air inlet (452) to the outside; and
an elastic member (470) between the punch body (450) and the push pin (460), and configured to provide an elastic restoring force,
the push pin (460, 610) and the elastic member (470) are accommodated in the inner space of the punch body (450).

2. The punch (440, 510, 520) as claimed in claim 1, wherein the push pin (460, 610) comprises a head (462, 620), and a rod (464, 630) protruding from the head (462, 620), and
wherein the air flow path (466) is located within the rod (464).

3. The punch (440, 510) as claimed in claim 2, wherein:
the rod (464) has a first hole (512) located at one side surface of the rod (464), and a second hole (518) located at a lower surface of the rod (464);
the air flow path (466) comprises a first air passage (514) extending in a first direction, and a second air passage (516) extending in a second direction different from the first direction;
the first hole (512) is configured to flow the air introduced from the air inlet (452) into an interior of the rod (464); and
the second hole (518) is configured to flow to the outside, the air flowing into the interior of the rod (464) that passes through the first air passage (514) and the second air passage (516).

4. The punch (440, 520) as claimed in claim 2, wherein:
the rod (464) has a first hole (522) located at one side surface of the rod (464), a second hole (524) located at another side surface of the rod (464), and a third hole (530) formed at a lower surface of the rod (464);
the air flow path (466) comprises a first air passage (526) extending in a first direction, and a second air passage (528) extending in a second direction different from the first direction;
the first hole (522) and the second hole (524) are configured to flow the air introduced from the air inlet (452) into an interior of the rod (464); and
the third hole (530) is configured to flow to the outside, the air flowing into the interior of the rod (464) that passes through the first air passage (526) and the second air passage (528).

5. The punch (440, 510, 520) as claimed in one of claims 2 to 4, wherein a through-hole (454) is located at a lower surface of the punch body (450) to allow the rod (464) to pass therethrough.

6. The punch (440, 510, 520) as claimed in at least one of claims 2 to 5, wherein the elastic member (470) is located between a lower surface of the inner space of the punch body (450) and a lower surface of the head (462).

7. The punch (440, 510, 520) as claimed in at least one of claims 2 to 6, wherein an upper surface of the inner space of the punch body (450) and an upper surface of the head (462) are spaced from each other.

8. The punch (440, 510, 520) as claimed in at least one of claims 2 to 7, wherein the push pin (610) further comprises a push member (640) at a lower end of the rod (630), and
wherein a lower surface area of the push member (640) is greater than a lower surface area of the rod (630).

9. The punch (440) as claimed in at least one of claims 2 to 8, wherein the push pin (460) is configured to be moved from a first position to a third position through a second position by the air introduced from the air inlet (452), and
wherein the push pin (460) is configured to be returned to the first position from the third position through the second position by the elastic member (470) if the air from the air inlet (452) is stopped.

10. The punch (440) as claimed in claim 9, wherein in the first position, a lower surface of the punch body (450) is flush with a lower surface of the rod (464).

11. The punch (440) as claimed in claim 9 or 10, wherein the air flow path (466) is configured to flow the air introduced from the air inlet (452) out to the outside during a movement of the push pin (460) from the first position to the second position.

12. The punch (440) as claimed in at least one of claims 9 to 11, wherein the second position closes the air flow path (466) by the punch body (450).

13. A punching machine (100) comprising:
a die (122, 420, 820) configured to receive a substrate thereon;
a stripper (112, 430, 830) opposite to the die (122, 420, 820), and configured to move toward the substrate (810) to hold the substrate in place;
the punch (114, 440, 840, 510, 520) according to claim 1 configured to move toward the substrate to cut the substrate, and remove a scrap (880) resulting from after the substrate is cut;
an air blower (150) connected to the punch (114, 440, 840); and
a controller (140) configured to control operations of the stripper (112, 830), the punch (114, 440, 840), and the air blower (150).

14. A punching method (700) comprising:
moving (S710) a stripper (830) toward a substrate (810) disposed on a die (820) to hold the substrate (810) in place;
moving (S720) a punch (840) toward the substrate (810) to cut the substrate (810); and
discharging (S730) a scrap (880) formed after the substrate (810) is cut by blowing air into the punch (840),
the punch (840) comprises:
a punch body (850) comprising an inner space and an air inlet (852);
wherein a push pin (860) comprising an air flow path (862) configured to flow through air introduced from the air inlet (852) out to the outside; and
an elastic member (870) between the punch body (850) and the push pin (860) to provide an elastic restoring force, and
the push pin (860) and the elastic member (870) are accommodated in the inner space of the punch body (850).

15. The punching method (700) as claimed in claim 14, wherein the discharging (S730) of the scrap comprises:
injecting the air into the air inlet (852) of the punch body (850) to blow the air toward the scrap (880) while moving the push pin (860) from a first position to a second position; and
injecting the air into the air inlet of the punch body (850) to push away the scrap (880) while moving the push pin (860) from the second position to a third position.
